# EUROPEAN PATENT APPLICATION

(11) **EP 4 825 154 A1**
(43) Date of publication of application: **21.10.2026**
(21) Application number: 24903758.1
(22) Date of filing: 12.12.2024
(51) Int. Cl.: A01C 1/06, C08F 8/12, C08F 16/06, C09D 7/61, C09D 129/04

(54) **COATING COMPOSITION FOR AGRICULTURAL USE, AND COATED SEED**

(30) Priority: 13.12.2023 JP 2023209809
(71) Applicant: Kuraray Co., Ltd., Kurashiki-shi, Okayama 710-0801 (JP)
(72) Inventor: SEKI, Michinari, Kurashiki-shi, Okayama 713-8550 (JP); IMAOKA, Yoriko, Kurashiki-shi, Okayama 713-8550 (JP); MORIKAWA, Keisuke, Kurashiki-shi, Okayama 713-8550 (JP)
(74) Representative: Müller-Boré & Partner Patentanwälte PartG mbB
(86) International application number: PCT/JP2024/044020
(87) International publication number: WO 2025/127105

(57) **Abstract**

An object of the present invention is to provide an agricultural coating composition having biodegradability and a small amount of dust generation. Disclosed is an agricultural coating composition comprising a vinyl alcohol polymer (A) that exhibits a retention time RT of a peak top of 22 minutes or more as measured on reversed-phase partition gradient high-performance liquid chromatography with a water-ethanol eluent.

## Description

### TECHNICAL FIELD

The present patent application claims Paris Convention priority based on Japanese Patent Application No. 2023-209809 (filed on December 13, 2023), which is incorporated herein by reference in its entirety.

The present invention relates to an agricultural coating composition comprising a vinyl alcohol polymer, and to a coated seed.

### BACKGROUND ART

As agricultural coating compositions to be used for coating agricultural materials, for example, coating compositions for seeds are widely used for coating seeds to increase the probability that the seeds grow into crops. To prevent seeds from being attacked by saprophytic fungi and insects before germination, agrochemicals are often added to such coating compositions for seeds. Conventionally, however, there has been a problem that coating compositions for seeds comprising agrochemicals provided on seeds often peel off and diffuse into the surrounding environment, thereby adversely affecting workers and organisms in the environment. To reduce peeling of agrochemicals from seeds, a binder mainly containing a polyacrylic acid ester or the like having high adhesiveness with a seed surface (Patent Document 1), a glossy coating material for seeds comprising a luster material, talc, polyvinyl alcohol, an ethylenevinyl acetate copolymer, and a water medium (Patent Document 2), and the like are known. However, these documents do not disclose an agricultural coating composition, such as a coating composition for seeds that has biodegradability and exfoliates less from a seed.

### PRIOR ART DOCUMENTS

### PATENT DOCUMENTS

Patent Document 1: WO 2013/166020 A
Patent Document 2: WO 2019/176272 A

### SUMMARY OF THE INVENTION

### PROBLEMS TO BE SOLVED BY THE INVENTION

An object of the present invention is to provide an agricultural coating composition having biodegradability and a small amount of dust generation, and a coated seed coated with the agricultural coating composition.

### SOLUTIONS TO THE PROBLEMS

The above object is achieved by an agricultural coating composition comprising a vinyl alcohol polymer (A) that exhibits a retention time RT of a peak top of 22 minutes or more as measured on reversed-phase partition gradient high-performance liquid chromatography with a water-ethanol eluent. The present invention comprises the following preferred embodiments.
[1] An agricultural coating composition comprising a vinyl alcohol polymer (A) that exhibits a retention time RT of a peak top of 22 minutes or more as measured on reversed-phase partition gradient high-performance liquid chromatography with a water-ethanol eluent.
[2] The agricultural coating composition according to [1], wherein the vinyl alcohol polymer has a degree of saponification of less than 70.0 mol%.
[3] The agricultural coating composition according to [2], wherein the vinyl alcohol polymer (A) is an unmodified vinyl alcohol polymer.
[4] The agricultural coating composition according to [1], wherein the agricultural coating composition further comprises inorganic microparticles.
[5] The agricultural coating composition according to [4], wherein the inorganic microparticles are at least one selected from the group consisting of talc, mica, diatomaceous earth, limestone, gypsum, bentonite, vermiculite, zeolite, silica sand, and barium sulfate.
[6] The agricultural coating composition according to [5], wherein the inorganic microparticles comprise talc.
[7] The agricultural coating composition according to [4], wherein a mass ratio of the inorganic microparticles to the vinyl alcohol polymer is 0.5 : 1.0 to 5.0 : 1.0.
[8] The agricultural coating composition according to any one of [1] to [7], wherein the agricultural coating composition is a coating composition for seeds.
[9] A coated seed in which at least a part of a surface of a seed is coated with the agricultural coating composition according to any one of [1] to [7].
[10] The coated seed according to [9], wherein the seed is at least one selected from the group consisting of corn, wheat, and soybean.

### EFFECTS OF THE INVENTION

The agricultural coating composition of the present invention is excellent in that it has biodegradability and a small amount of dust generation.

In the present description, a numerical range described using "to" means including numerical values described before and after the "to" as a lower limit value and an upper limit value. In the present description, the upper limit values and the lower limit values of the numerical ranges (content, physical properties, etc.) can be appropriately combined.

### DETAILED DESCRIPTION

### <Agricultural coating composition>

The agricultural coating composition of the present invention is an agricultural coating composition comprising a vinyl alcohol polymer (A) that exhibits a retention time RT of a peak top of 22 minutes or more as measured on reversed-phase partition gradient high-performance liquid chromatography with a water-ethanol eluent. Hereinafter, the "vinyl alcohol polymer" may be referred to as "PVA", and the vinyl alcohol polymer (A) satisfying the prescribed requirements may be referred to as PVA (A).

The agricultural coating composition of the present invention is a composition to be used for applications of coating agricultural materials. One preferred embodiment of the agricultural coating composition of the present invention is a coating composition for seeds. Another preferred embodiment of the present invention is an agricultural coating composition to be used for coating an agricultural material other than seeds. Examples of the agricultural material other than seeds include fertilizers, soil, sand, and stones. Among them, the agricultural coating composition is preferably a coating composition for fertilizers that coats fertilizers.

The PVA (A) which the agricultural coating composition of the present invention comprises is a polymer comprising a vinyl alcohol unit as a structural unit. The lower limit of the proportion of the vinyl alcohol unit to all structural units in the PVA (A) is, for example, preferably 10 mol%, more preferably 20 mol%, still more preferably 30 mol%, and is even more preferably 40 mol% in some cases. On the other hand, the upper limit of the proportion of the vinyl alcohol unit is, for example, preferably 90 mol%, more preferably 80 mol%, and is further preferably 60 mol% in some cases. That is, a suitable proportion of the vinyl alcohol unit to all the structural units in the PVA (A) is, for example, 10 to 90 mol%, and ranges of the respective numerical values described above as being preferable are each suitable. The PVA (A) may be obtained by, for example, polymerizing a vinyl ester monomer, followed by saponifying a vinyl ester polymer thus obtained, and the PVA (A) may comprise, for example, a vinyl ester unit, in addition to the vinyl alcohol unit.

The PVA (A) exhibits a retention time RT of a peak top of 22 minutes or more as measured on reversed-phase partition gradient high-performance liquid chromatography with a water-ethanol eluent. It is noted that the "peak top" as referred to herein is, in a chromatogram obtained by chromatographic measurement, a point at which the detection intensity is the absolute maximum value and is a local maximum value; and the "peak top" means a peak top derived from the PVA (A). Such a PVA has high hydrophobicity and is further superior in adhesive force between the PVA and a seed surface. This is considered to be because the PVA having high hydrophobicity is adsorbed to a hydrophobic seed surface to improve the adhesive force between the PVA and the seed surface. The PVA (A) preferably has a retention time RT of more than 22 minutes. The PVA (A) preferably has a retention time RT of 25 minutes or less. That is, a preferable range of the retention time RT is, for example, 22 to 25 minutes, and ranges of the numerical values described above as being preferable are suitable. The PVA (A) with 22 minutes < RT <25 minutes is more preferred. The retention time RT of the PVA (A) can be adjusted by introducing a modifying group and/or regulating the degree of saponification and the viscosity-average degree of polymerization.

The retention time RT of the PVA (A) can be measured under the following measurement conditions.
Column: Shimpack G-ODS (4) (manufactured by Shimadzu Corporation, octadecyl group-modified spherical fully porous silica gel, inner diameter of 4 mm × length of 10 mm, particle diameter: 5 µm)
Column temperature: 45°C
Eluent: ion-exchanged water (X), ethanol (purity 99.5%) (Y)
Eluent constitution for each measurement time (the concentration is on a volume basis):
   0 to 5 minutes: concentration of (Y) being 5%, constant
   5 to 25 minutes: concentration of (Y) being 5 to 100%
   25 to 40 minutes: concentration of (Y) being 100%, constant
   40 to 41 minutes: concentration of (Y) being 100 to 5%
   41 to 55 minutes: concentration of (Y) being 5%, constant
Mobile phase flow rate: 0.4 mL/minutes
Sample concentration: 5 mg/mL
Detector: ELSD-LTII (manufactured by Shimadzu Corporation, drift tube temperature of 40°C; gain 6 (= 32 times); N₂ gas primary spray pressure of 0.4 MPa and secondary spray pressure of 0.35 MPa; data acquisition interval of 1000 msec; filter: 1 sec.)
Injection amount: 5 µL
Length from injection to column inlet: 900 mm
Length from column outlet to nebulizer of ELSD-LTII detector: 1375 mm
Pipe diameter: 0.3 mm ID

The lower limit of the degree of saponification of the PVA (A) is preferably 20 mol%, more preferably 30 mol%, still more preferably 40 mol%, and even more preferably 45 mol%. The degree of saponification of the PVA (A) is preferably less than 70 mol%, and in one embodiment, the upper limit of the degree of saponification of the PVA (A) is more preferably 69.9 mol%, still more preferably 65 mol%, and even more preferably 55 mol%. That is, a preferable range of the degree of saponification of the PVA (A) is, for example, 20 mol% to less than 70 mol%, and ranges of the respective numerical values described above as being preferable are each suitable. When the degree of saponification of the PVA (A) is within the above range, the coating composition is more superior in adhesion to a seed surface (coatability) and biodegradability. The degree of saponification of the PVA (A) is measured by the method described in JIS K 6726:1994.

The lower limit of the viscosity-average degree of polymerization of the PVA (A) is preferably 100, more preferably 150, and still more preferably 200. The upper limit of the viscosity-average degree of polymerization of the PVA is preferably 3500, more preferably 2000, still more preferably 1500, even more preferably 1000, particularly preferably 500, and, in some cases, more particularly preferably 300. That is, a preferable range of the viscosity-average degree of polymerization of the PVA (A) is, for example, 100 to 3500, and ranges of the respective numerical values described above as being preferable are each suitable. When the viscosity-average degree of polymerization of the PVA (A) is within the above range, the coating composition is more superior in adhesion to a seed surface (coatability). The viscosity-average degree of polymerization of the PVA (A) is measured in accordance with JIS K 6726:1994.

The PVA (A) can be produced, for example, by saponifying a vinyl ester polymer obtained by polymerizing a vinyl ester monomer. Examples of the vinyl ester monomer include vinyl formate, vinyl acetate, vinyl propionate, vinyl valerate, vinyl caprate, vinyl laurate, vinyl stearate, vinyl benzoate, vinyl butyrate, vinyl isobutyrate, vinyl pivalate, vinyl versatate, vinyl caproate, vinyl caprylate, vinyl caprate, vinyl laurate, vinyl palmitate, vinyl stearate, and vinyl oleate. Among these, vinyl acetate is preferred in light of availability and economic efficiency. Only one type of the vinyl ester monomer may be used, or two or more types thereof may be used in combination.

The PVA (A) may be a modified PVA obtained by introducing a unit other than a unit derived from the vinyl ester monomer or a functional group using a procedure such as copolymerization, acetalization, esterification, or the like.

When the PVA (A) is a copolymerization-modified PVA, the copolymerization-modified PVA can be obtained, for example, by saponifying a vinyl ester copolymer obtained by copolymerizing a vinyl ester monomer and a monomer other than the vinyl ester monomer. Any monomer copolymerizable with the vinyl ester monomer can be used as the monomer other than the vinyl ester monomer to be copolymerized with the vinyl ester monomer as long as it is as long as the effect of the present invention is not impaired, and examples thereof include α-olefins such as ethylene, propylene, 1-butene, isobutene, pentene, 1-hexene, 1-octene, 1-dodecene, 1-hexadecene, and 1-octadecene; (meth)acrylic acid esters such as methyl (meth)acrylate, ethyl (meth)acrylate, n-propyl (meth)acrylate, isopropyl (meth)acrylate, n-butyl (meth)acrylate, 2-ethylhexyl (meth)acrylate, cyclohexyl (meth)acrylate, stearyl (meth)acrylate, and octadecyl (meth)acrylate; acrylamide derivatives such as N-methylacrylamide and N-ethylacrylamide; methacrylamide derivatives such as N-methylmethacrylamide and N-ethylmethacrylamide; vinyl ethers such as methyl vinyl ether, ethyl vinyl ether, n-propyl vinyl ether, isopropyl vinyl ether, n-butyl vinyl ether, lauryl vinyl ether, and vinyl stearate ether (stearyl vinyl ether); allyl acetate; allyl ethers such as propyl allyl ether, butyl allyl ether, and hexyl allyl ether; monomers having an oxyalkylene group; isopropenyl acetate; and monomers having a silyl group such as vinylmethyldimethoxysilane, vinyldimethylmethoxysilane, vinyltriethoxysilane, vinylmethyldiethoxysilane, vinyldimethylethoxysilane, 3-(meth)acrylamidopropyltrimethoxysilane, and 3-(meth)acrylamidopropyltriethoxysilane. These may be used singly, or two or more of them may be used in combination.

When the PVA (A) is a modified PVA obtained by introducing a modifying group by acetalization, the modifying agent to be used for introducing the modifying group by acetalization is not particularly limited as long as the effect of the present invention is not impaired, and examples thereof include linear, branched, cyclic saturated, cyclic unsaturated, or aromatic aldehydes and aldoses having 1 to 19 carbon atoms. Specific examples include formaldehyde, acetaldehyde, propionyl aldehyde, n-butyl aldehyde, isobutyl aldehyde, tert-butyl aldehyde, benzaldehyde, cyclohexyl aldehyde, pentanal, hexanal, heptanal, octanal, nonanal, decanal, dodecanal, tetradecanal, hexadecanal, and octadecanal. The modifying agent may be, for example, one in which one or more hydrogen atoms are replaced with halogen or the like. The modifying agent may be used alone, or two or more types thereof may be used in combination.

When the PVA (A) is a modified PVA obtained by introducing a modifying group by esterification, the modifying agent to be used for introduction of the modifying group by esterification is not particularly limited, and examples thereof include linear, branched, cyclic saturated, cyclic unsaturated, or aromatic carboxylic acids having 1 to 19 carbon atoms, and carboxylic acid derivatives such as carboxylic acid halides, vinyl esters, fatty acids. Specific examples thereof include acetic acid, propionic acid, butyric acid, valeric acid, caproic acid, enanthic acid, caprylic acid, pelargonic acid, capric acid, lauric acid, myristic acid, palmitic acid, margaric acid, stearic acid, and acid chlorides thereof. The modifying agent may be, for example, one in which one or more hydrogen atoms are replaced with halogen or the like. The modifying agent may be used alone, or two or more types thereof may be used in combination.

In one embodiment of the present invention, the PVA (A) is preferably an unmodified PVA that is not modified from the viewpoint of biodegradability and production cost. The unmodified PVA as referred to herein is a PVA in which neither a unit other than a unit derived from a vinyl ester monomer nor a functional group is introduced into a side chain and structural units excluding terminals are composed substantially only of a vinyl alcohol unit and a vinyl ester unit, and such a PVA is obtained by polymerization of the vinyl ester monomer and subsequent saponification. It is noted that the unmodified PVA may have, at a terminal thereof, a structure other than a vinyl alcohol unit and a vinyl ester unit derived from a polymerization initiator, a chain transfer agent, or the like.

In the production of the PVA (A), as a method for obtaining a vinyl ester polymer from a vinyl ester monomer, a bulk polymerization method, a solution polymerization method, a suspension polymerization method, an emulsion polymerization method, a dispersion polymerization method, or the like can be employed, for example. Among these, the solution polymerization method is industrially preferred.

In the preparation of the vinyl ester polymer, a polymerization initiator may be used. The polymerization initiator may be selected from among publicly-known initiators depending on the polymerization method. Examples of the polymerization initiator specifically include azo type initiators such as 2,2'-azobisisobutyronitrile, 2,2'-azobis(2,4-dimethylvaleronitrile), and 2,2'-azobis(4-methoxy-2,4-dimethylvaleronitrile); percarbonate compounds such as diisopropyl peroxydicarbonate, di-2-ethylhexyl peroxydicarbonate, and diethoxyethyl peroxydicarbonate; perester compounds such as t-butyl peroxyneodecanate, α-cumyl peroxyneodecanate, and t-butyl peroxydecanate; acetylcyclohexylsulfonyl peroxide; and peroxide type initiators such as 2,4,4-trimethylpentyl-2-peroxyphenoxyacetate.

The amount of the polymerization initiator may be appropriately determined according to the types of the monomer and the initiator to be used and an intended degree of polymerization, and the like, and the amount of the polymerization initiator is preferably 0.20 to 0.33 mass% with respect to the total mass of the vinyl ester monomer.

In the preparation of the vinyl ester polymer, a chain transfer agent may be used. The chain transfer agent may be selected from among publicly-known chain transfer agents depending on the polymerization method. Examples of the chain transfer agent specifically include aldehydes such as acetaldehyde and propionaldehyde; ketones such as acetone and methyl ethyl ketone; halogenated hydrocarbons such as trichloroethylene and perchloroethylene; and phosphinic acid salts such as sodium phosphinate monohydrate. Among these, aldehydes and ketones are suitably used. The amount of the chain transfer agent is not particularly limited as long as it can be predetermined to give an intended degree of polymerization (for example, a desired degree of polymerization) of the vinyl ester polymer according to the chain transfer constant of the chain transfer agent to be added. In addition, a functional group may be introduced by using these chain transfer agents; a chain transfer agent having an alkyl group may be used to introduce an aliphatic hydrocarbon group to a terminal, or a chain transfer agent having a carboxy group may be used to introduce an ionic functional group to a terminal.

The polymerization conditions and the like may be appropriately determined according to the type and amount of the monomer to be used, desired physical properties, the polymerization method to be employed, and the like. For example, the polymerization temperature is usually 0 to 150°C, and preferably 20 to 120°C.

The polymerization conversion in the vinyl ester polymer may be, for example, 20 to 95%. From the viewpoint of improvement in yield, control of the degree of polymerization, and the like, the polymerization conversion is preferably 30% or more, and more preferably 40% or more.

For the saponification reaction of the obtained vinyl ester polymer, an alcoholysis or hydrolysis reaction using a conventionally publicly-known basic catalyst such as sodium hydroxide, potassium hydroxide, or sodium methoxide, or acidic catalyst such as p-toluenesulfonic acid can be applied. Examples of the solvent to be used in the saponification reaction include alcohols such as methanol and ethanol; esters such as methyl acetate and ethyl acetate; ketones such as acetone and methyl ethyl ketone; and aromatic hydrocarbons such as benzene and toluene. These may be used singly, or two or more of them may be used in combination. In particular, what is preferred as the saponification reaction is a method in which the saponification reaction is conducted in the presence of sodium hydroxide as a basic catalyst using methanol or a mixed solution of methanol and methyl acetate as a solvent.

The amount of the catalyst to be used in the saponification reaction may be appropriately determined according to the type of the catalyst to be used, the target degree of saponification, and the like. For example, when sodium hydroxide is used as a catalyst for the saponification reaction, the proportion (molar ratio) of the catalyst to the vinyl ester monomer in the vinyl ester copolymer is preferably 0.0015 to 0.0095 in one embodiment of the present invention.

In the agricultural coating composition, the proportion of the PVA (A) is preferably 2 to 10 wt% based on the total weight of the agricultural coating composition.

In one embodiment, the agricultural coating composition preferably comprises inorganic microparticles. As the inorganic microparticles, at least one selected from the group consisting of talc, mica, diatomaceous earth, limestone, gypsum, bentonite, vermiculite, zeolite, silica sand, and barium sulfate is preferable. Talc and/or mica is more preferable, and talc is still more preferable. The average particle diameter of the inorganic microparticles is preferably 0.1 µm or more and 100 µm or less, more preferably 1 µm or more and 80 µm or less, still more preferably 5 µm or more and 60 µm or less, and even more preferably 10 µm or more and 50 µm or less.

The mass ratio of the inorganic microparticles to the PVA (A) in the agricultural coating composition is preferably 0.5 : 1.0 to 5.0 : 1.0, more preferably 0.6 : 1.0 to 3.0 : 1.0, and still more preferably 0.7 : 1.0 to 1.0 : 1.0.

The agricultural coating composition may further comprise an agrochemical. The agrochemical as referred to herein means an agent that prevents or reduces damage to seeds from an organism, and is preferably at least one selected from the group consisting of an insecticide, a fungicide, and a nematicide.

In one embodiment, the agrochemical is preferably a hydrophobic agrochemical. The hydrophobic agrochemical as referred to herein is an agrochemical that does not dissolve itself in water or cannot be stably dispersed in water (for example, in the absence of a surfactant).

The hydrophobic agrochemical is not particularly limited, and may be a commonly commercially available hydrophobic agrochemical, and is preferably at least one selected from the group consisting of pyraclostrobin, fluxapyroxad, ipconazole, trifloxystrobin, metalaxyl, fludioxonil, thiabendazole, triticonazole, imidacloprid, and tefluthrin.

The insecticide is preferably at least one selected from the group consisting of clothianidin, tefluthrin, terbufos, cypermethrin, thiodicarb, lindane, furathiocarb, and acephate.

In one embodiment, the agricultural coating composition may be a solution comprising a solvent. The solvent is preferably water, and the water may be ion-exchanged water. In one embodiment, the agricultural coating composition may comprise an alcohol as a solvent, but the content of the alcohol is preferably 20 wt% or less, more preferably 10 wt% or less, still more preferably 5 wt% or less, and it is even more preferable that the content of the alcohol is 0, that is, the agricultural coating composition is substantially free of alcohols.

In one embodiment, when the agricultural coating composition is a solution, the solid concentration thereof is not particularly limited, but it is preferred that the solid concentration be 30 to 50 wt% based on the total weight of the agricultural coating composition. For example, such an agricultural coating composition having a solid concentration of 30 to 50 wt% may be used after being diluted to any suitable concentration with a medium, such as water, at the time of use. The solid concentration of the agricultural coating composition at the time of use may be, for example, 1 to 10 wt%.

In one embodiment, the agricultural coating composition may be in the form of, for example, a solution, a dispersion, an emulsion, a suspension, or the like according to the PVA (A) and any other ingredients. For example, some of the components which the agricultural coating composition comprises may be in a solution, while other components may be dispersed, emulsified and/or suspended. In such embodiments, for example, when the agricultural coating composition is used for seed coating, the components of the composition are preferably distributed (dispersed or mixed) substantially uniformly prior to application to seeds. Thus, it is preferred that the agricultural coating composition is a stable solution, dispersion, emulsion, or suspension in which the components can be easily uniformly distributed by conventional means such as stirring with or without gentle heating.

In one embodiment, the agricultural coating composition may be enhanced in coating performance by blending other polymers that are compatible with a PVA, such as polyvinylpyrrolidone, starch, or high molecular weight polyethylene glycol, (for example, polymers that can function as a binder and are soluble in water). In the embodiment described above, at least one selected from the group consisting of a plasticizer, the inorganic microparticles described above, a pigment, and a detackifier may be optionally added to the agricultural coating composition in the form of a solution, a dispersion, an emulsion, or a suspension. As the pigment, anthraquinone, triphenylmethane, phthalocyanine, diazonium salts, azo compounds, metal oxides, cyano complexes, carbon black, and derivatives thereof are preferable. The pigment may be used singly, or two or more types thereof may be used in combination. For example, at least one selected from the group consisting of iron oxide, TiO₂, Prussian blue (CAS No. 14038-43-8), Pigment Red 112 (CAS No. 6535-46-2), Pigment Red 2 (CAS No. 6041-94-7), Pigment Red 48:2 (CAS No. 7023-61-2), Phthalocyanine Blue (CAS No. 147-14-8), Pigment Green 36 (CAS No. 14302-13-7), Pigment Green 7 (CAS No. 1328-53-6), Pigment Yellow 74 (CAS No. 6358-31-2), Pigment Orange 5 (CAS No. 3468-63-1), Pigment Violet 23 (CAS No. 6358-30-1), and Pigment Black 7 (CAS No. 97793-37-8, 1333-86-4, 12768-98-8) is preferable. The content of the pigment is preferably 0.1% or more and 10% or less, more preferably 0.3% or more and 5% or less, still more preferably 0.5% or more and 2% or less in the solid content of the agricultural coating composition. In addition, a polyhydric alcohol such as trimethylolpropane, glycerin, or propylene glycol may be added in order to enhance the adhesiveness of the PVA (A) to a seed surface.

In one embodiment, the agricultural coating composition may be enhanced in the dispersion stability of the contents by blending any surfactant. As the surfactant, alkyl sulfates, alkyl sulfonates, alkylbenzene sulfonates, polyoxyalkylene alkyl ether sulfates (alkyl ether sulfates), polyoxyalkylene alkyl ether carboxylates (alkyl ether acetates), α-olefin sulfonates, phosphate ester salts, acyl amino acid salts, acyl taurine salts, acyl lactates, soaps (higher fatty acids), alkyl sulfosuccinates, acyl hydrolyzed collagen salts, acyl isethionates, and the like can also be used. Among them, at least one selected from the group consisting of the alkyl sulfates and the acyl amino acid salts is preferable as the surfactant, and the alkyl sulfates are more preferable. Among the alkyl sulfates, sodium dodecyl sulfate is preferable. The content of the surfactant is preferably 1 wt% or more and 10 wt% or less, more preferably 1.5 wt% or more and 5 wt% or less, and still more preferably 2 wt% or more and 3 wt% or less with respect to the PVA (A).

In one embodiment, the agricultural coating composition may be enhanced in the coating ability to seeds by blending any wax. As the wax, natural wax, synthetic wax, or the like can also be used.

As the natural wax, any wax derived from animals, plants, crude oils, minerals, or the like can be used. Examples of animal-derived waxes include beeswax, shellac wax, and Chinese wax; examples of plant-derived waxes include carnauba wax, candelilla wax, rice wax, and Japan wax; examples of crude oil-derived waxes include paraffin wax, microcrystalline wax, and slack wax; and examples of mineral-derived waxes include montan wax, ceresin, and ozokerite.

As the synthetic wax, any synthetic wax such as polyethylene wax, polypropylene wax, or Fischer-Tropsch wax can be used.

As the wax, it is more preferable to use a natural wax, Fischer-Tropsch wax, or the like because of their biodegradability and low environmental load.

The method for coating an agricultural material such as seeds with an agricultural coating composition is not particularly limited, and for example, seeds and the agricultural coating composition may be mixed, or the agricultural coating composition may be sprayed onto seeds. The coating method may be either a batch method or a continuous coating method. A coating machine may be used for coating, and examples of the coating machine include a rotary coater, a drum coater, and a fluidized bed.

### <Coated seed>

One embodiment of the present invention is a coated seed in which at least a part of the surface of a seed is coated with the agricultural coating composition described above. In one embodiment, by coating a seed with the present agricultural coating composition together with an agrochemical, it is possible to provide a seed which allows less peeling of the agrochemical from the seed and has a high germination rate.

Examples of the seed include wheat, barley, rye, oats, rice, sorghum, apple, pear, plum, peach, almond, cherry, strawberry, raspberry, blackberry, sugar beet, feed beet, bean, lentil, pea, soybean, rapeseed, mustard, poppy, olive, sunflower, coconut, castor bean, cocoa bean, mallow, cucumber, melon, cotton, flax, hemp, jute, orange, lemon, grapefruit, mandarin, spinach, lettuce, asparagus, cabbage, carrot, onion, tomato, potato, paprika, avocado, flower, shrub, hardwood, fruit plant seed, tomato, pepper, potato, bulbs, corn, tobacco, nut, coffee, and sugar cane, and the seed is preferably selected from the group consisting of corn, wheat, and soybean.

### EXAMPLES

Hereafter, the present invention will be described in further detail by way of examples, but the present invention is not limited by the examples at all. The viscosity-average degree of polymerization, the degree of saponification, the retention time RT of the PVA (A) in the composition, the amount of dust generation and the biodegradability in Examples were measured by the following methods.

### [Viscosity-average degree of polymerization]

The viscosity-average degrees of polymerization of PVA-1 to PVA-4 were measured in accordance with JIS K 6726:1994. Specifically, when the degrees of saponification of PVA-1 to PVA-4 were less than 99.5 mol%, the PVA-1 to PVA-4 were saponified until the degree of saponification reached 99.5 mol% or more, and for the resulting PVA-1 to PVA-4, the viscosity-average degree of polymerization was determined from the following formula using the limiting viscosity [η] (liter/g) measured at 30°C in water.$Viscosity - average degree of polymerization = {\left(\left[η\right]\times {10}^{4}/8.29\right)}^{\left(1/0.62\right)}$

### [Degree of saponification]

The degrees of saponification (mol%) of PVA-1 to PVA-4 were measured in accordance with JIS K 6726:1994.

### [Retention time RT of PVA]

The retention times RT of PVA-1 to PVA-4 are each the retention time of a peak top measured by reversed-phase partition gradient high-performance liquid chromatography using a mixed solution of ion-exchanged water/ethanol as an eluent. The measurement was conducted under the following conditions. It is noted that the "peak top" is, in a chromatogram obtained by chromatographic measurement, a point at which the detection intensity is the absolute maximum value and is a local maximum value.

### <Measurement conditions>

Column: Shimpack G-ODS (4) (manufactured by Shimadzu Corporation, octadecyl group-modified spherical fully porous silica gel, inner diameter of 4 mm × length of 10 mm, particle diameter: 5 µm)
Column temperature: 45°C
Eluent: ion-exchanged water (X), ethanol (purity 99.5%) (Y)
Eluent constitution for each measurement time (the concentration is on a volume basis):
   0 to 5 minutes: concentration of (Y) being 5%, constant
   5 to 25 minutes: concentration of (Y) being 5 to 100%
   25 to 40 minutes: concentration of (Y) being 100%, constant
   40 to 41 minutes: concentration of (Y) being 100 to 5%
   41 to 55 minutes: concentration of (Y) being 5%, constant
Mobile phase flow rate: 0.4 mL/min.
Sample concentration: 5 mg/mL
Detector: ELSD-LTII (manufactured by Shimadzu Corporation, drift tube temperature of 40°C; gain 6 (= 32 times); N₂ gas primary spray pressure of 0.4 MPa and secondary spray pressure of 0.35 MPa; data acquisition interval of 1000 msec.; filter: 1 sec.)
Injection amount: 5 µL
Length from injection to column inlet: 900 mm
Length from column outlet to nebulizer of ELSD-LTII detector: 1375 mm
Pipe diameter: 0.3 mm ID

### [Amount of dust generation]

100 g of coated seeds were put into a 300 mL wide-mouth plastic bottle, and the bottle was capped, then set on a small ball mill rotating stand (AV-1, manufactured by Asahi Rika Seisakusho Co., Ltd.), and rotated at 80 rpm for 15 minutes. The treated coated seeds were put on a metallic sieve, whereby a fine powder was removed, and then the weight of the coated seeds remaining after removal of the fine powder was measured using a precision balance. The amount of weight loss before and after the removal of the fine powder was defined as the amount of dust generation.

### [Biodegradability of resin component]

The biodegradabilities of PVA-1 to PVA-4 and the resin component Em-1 (a resin component having the same composition as that of Latex carrier described in Table 1 of WO 2013/166020 A) used in Comparative Examples 7 to 9 were evaluated in accordance with ISO 14851 (BOD measurement with activated sludge), with any sample 60% or more of which was decomposed within 28 days in water being rated as A and any sample less than 60% of which was decomposed being rated as B.

### [Production Example 1]

A 3 L reaction vessel equipped with a stirrer, a nitrogen inlet, an additive inlet, and an initiator inlet was charged with 480 g of vinyl acetate and 1120 g of methanol, the temperature of the resulting mixture was raised to 60°C, and the inside of the system was purged with nitrogen by nitrogen bubbling for 30 minutes. The temperature in the reaction vessel was adjusted to 60°C, and 1.2 g of 2,2'-azobis(4-methoxy-2,4-dimethylvaleronitrile) was added to initiate polymerization. The polymerization temperature was maintained at 60°C during the polymerization, and the polymerization was stopped by cooling when the polymerization conversion reached 70% after 5 hours. Subsequently, unreacted vinyl acetate was removed under reduced pressure, affording a solution of polyvinyl acetate in methanol. Saponification was allowed to occur by adding a solution of NaOH in methanol (concentration of 10% by mass) to the solution of polyvinyl acetate in methanol adjusted to 30% such that an alkali molar ratio (number of moles of NaOH/ number of moles of vinyl ester unit in polyvinyl acetate) became 0.0025, whereby PVA-1 as PVA (A) was obtained. The degree of saponification, the viscosity-average degree of polymerization, and the retention time RT of the obtained PVA-1 are shown in Table 1.

### [Production Example 2]

A 3 L reaction vessel equipped with a stirrer, a nitrogen inlet, an additive inlet, and an initiator inlet was charged with 720 g of vinyl acetate and 880 g of methanol, the temperature of the resulting mixture was raised to 60°C, and the inside of the system was purged with nitrogen by nitrogen bubbling for 30 minutes. The temperature in the reaction vessel was adjusted to 60°C, and 1.2 g of 2,2'-azobis(4-methoxy-2,4-dimethylvaleronitrile) was added to initiate polymerization. The polymerization temperature was maintained at 60°C during the polymerization, and the polymerization was stopped by cooling when the polymerization conversion reached 70% after 5 hours. Subsequently, unreacted vinyl acetate was removed under reduced pressure, affording a solution of polyvinyl acetate in methanol. Saponification was allowed to occur by adding a solution of NaOH in methanol (concentration of 10% by mass) to the solution of polyvinyl acetate in methanol adjusted to 30% such that an alkali molar ratio (number of moles of NaOH/ number of moles of vinyl ester unit in polyvinyl acetate) became 0.0037, whereby PVA-2, which does not correspond to PVA (A), was obtained. The degree of saponification, the viscosity-average degree of polymerization, and the retention time RT of the obtained PVA-2 are shown in Table 1.

### [Production Example 3]

A 3 L reaction vessel equipped with a stirrer, a nitrogen inlet, an additive inlet, and an initiator inlet was charged with 720 g of vinyl acetate and 880 g of methanol, the temperature of the resulting mixture was raised to 60°C, and the inside of the system was purged with nitrogen by nitrogen bubbling for 30 minutes. The temperature in the reaction vessel was adjusted to 60°C, and 1.2 g of 2,2'-azobis(4-methoxy-2,4-dimethylvaleronitrile) was added to initiate polymerization. The polymerization temperature was maintained at 60°C during the polymerization, and the polymerization was stopped by cooling when the polymerization conversion reached 70% after 5 hours. Subsequently, unreacted vinyl acetate was removed under reduced pressure, affording a solution of polyvinyl acetate in methanol. Saponification was allowed to occur by adding a solution of NaOH in methanol (concentration of 10% by mass) to the solution of polyvinyl acetate in methanol adjusted to 30% such that an alkali molar ratio (number of moles of NaOH/ number of moles of vinyl ester unit in polyvinyl acetate) became 0.0073, whereby PVA-3, which does not correspond to PVA (A), was obtained. The degree of saponification, the viscosity-average degree of polymerization, and the retention time RT of the obtained PVA-3 are shown in Table 1.

### [Production Example 4]

A 3 L reaction vessel equipped with a stirrer, a nitrogen inlet, an additive inlet, and an initiator inlet was charged with 720 g of vinyl acetate and 880 g of methanol, the temperature of the resulting mixture was raised to 60°C, and the inside of the system was purged with nitrogen by nitrogen bubbling for 30 minutes. The temperature in the reaction vessel was adjusted to 60°C, and 1.2 g of 2,2'-azobis(4-methoxy-2,4-dimethylvaleronitrile) was added to initiate polymerization. The polymerization temperature was maintained at 60°C during the polymerization, and the polymerization was stopped by cooling when the polymerization conversion reached 70% after 5 hours. Subsequently, unreacted vinyl acetate was removed under reduced pressure, affording a solution of polyvinyl acetate in methanol. Saponification was allowed to occur by adding a solution of NaOH in methanol (concentration of 10% by mass) to the solution of polyvinyl acetate in methanol adjusted to 30% such that an alkali molar ratio (number of moles of NaOH/ number of moles of vinyl ester unit in polyvinyl acetate) became 0.03, whereby PVA-4, which does not correspond to PVA (A), was obtained. The degree of saponification, the viscosity-average degree of polymerization, and the retention time RT of the obtained PVA-4 are shown in Table 1.

### [Example 1]

Using PVA-1 as a resin component and mica (MICA C-4000, manufactured by IMERYS, average particle diameter: 14 µm) as inorganic microparticles, a coating composition for seeds was prepared in accordance with the following method, and this was named agricultural coating composition Coat-1.

### (Preparation of agricultural coating composition)

A pigment dispersion was prepared by mixing 10 g of the inorganic microparticles, 2.9 g of phthalocyanine blue (manufactured by FUJIFILM Wako Pure Chemical Corporation) as a pigment, and 18.6 g of deionized water until the mixture became uniform. Subsequently, 3.2 g of the resin component, 83 mg (2.6 wt% with respect to PVA-1) of sodium dodecyl sulfate (manufactured by FUJIFILM Wako Pure Chemical Corporation), and 37.8 g of ion-exchanged water were mixed until the mixture became uniform, whereby an 8 wt% aqueous solution of the resin component was prepared. 19.7 g of the 8 wt% aqueous solution of the resin component, 4.46 g of the pigment dispersion, and 20.84 g of water were mixed until the mixture became uniform, and the obtained mixture was used as an agricultural coating composition. The solid concentration of the obtained agricultural coating composition was 7.5%, and the breakdown of the solid included 3.5% of the resin component, 3.1% of the inorganic microparticles, and 0.9% of the pigment.

### (Coating seeds)

8 mL of the agricultural coating composition was added to 200 g of corn seeds (popcorn, butterfly type), and coating was conducted using a drying pan type granulator (DPZ-01R, AS ONE Corporation). Coating was conducted at a temperature of 35 to 40°C, a rotation speed of 20 rpm, an angle of 30 degrees, and a drying time of 40 minutes, yielding coated seeds.

### [Example 2]

Agricultural coating composition Coat-2 was obtained in the same manner as in Example 1 except that talc (manufactured by FUJIFILM Wako Pure Chemical Corporation, average particle diameter: 34 µm) was used as inorganic microparticles. The solid concentration of the obtained agricultural coating composition was 7.5%, and the breakdown of the solid included 3.5% of the resin component, 3.1% of the inorganic microparticles, and 0.9% of the pigment.

### [Example 3]

Agricultural coating composition Coat-3 was obtained in the same manner as in Example 1 except that talc (manufactured by FUJIFILM Wako Pure Chemical Corporation, average particle diameter: 34 µm) was used as inorganic microparticles, and 3.3 g of polyethylene wax (trade name: "Liquitron 461", manufactured by The Lubrizol Corporation) was added as an additional additive. The solid concentration of the obtained agricultural coating composition was 10.4%, and the breakdown of the solid included 3.3% of the resin component, 3.3% of the polyethylene wax, 2.9% of the inorganic microparticles, and 0.9% of the pigment.

### [Comparative Example 1]

Agricultural coating composition Coat-4 was obtained in the same manner as in Example 1 except that PVA-2 was used as a resin component and sodium dodecyl sulfate was not added. The solid concentration of the obtained agricultural coating composition was 7.5%, and the breakdown of the solid included 3.5% of the resin component, 3.1% of the inorganic microparticles, and 0.9% of the pigment.

### [Comparative Example 2]

Agricultural coating composition Coat-5 was obtained in the same manner as in Comparative Example 1 except that talc (manufactured by FUJIFILM Wako Pure Chemical Corporation, average particle diameter: 34 µm) was used as inorganic microparticles. The solid concentration of the obtained agricultural coating composition was 7.5%, and the breakdown of the solid included 3.5% of the resin component, 3.1% of the inorganic microparticles, and 0.9% of the pigment.

### [Comparative Example 3]

Agricultural coating composition Coat-6 was obtained in the same manner as in Comparative Example 1 except that PVA-3 was used as a resin component. The solid concentration of the obtained agricultural coating composition was 7.5%, and the breakdown of the solid included 3.5% of the resin component, 3.1% of the inorganic microparticles, and 0.9% of the pigment.

### [Comparative Example 4]

Agricultural coating composition Coat-7 was obtained in the same manner as in Comparative Example 3 except that talc (manufactured by FUJIFILM Wako Pure Chemical Corporation, average particle diameter: 34 µm) was used as inorganic microparticles. The solid concentration of the obtained agricultural coating composition was 7.5%, and the breakdown of the solid included 3.5% of the resin component, 3.1% of the inorganic microparticles, and 0.9% of the pigment.

### [Comparative Example 5]

Agricultural coating composition Coat-8 was obtained in the same manner as in Example 1 except that PVA-3 was used as a resin component. The solid concentration of the obtained agricultural coating composition was 7.5%, and the breakdown of the solid included 3.5% of the resin component, 3.1% of the inorganic microparticles, and 0.9% of the pigment.

### [Comparative Example 6]

Agricultural coating composition Coat-9 was obtained in the same manner as in Comparative Example 4 except that PVA-4 was used as a resin component. The solid concentration of the obtained agricultural coating composition was 7.5%, and the breakdown of the solid included 3.5% of the resin component, 3.1% of the inorganic microparticles, and 0.9% of the pigment.

### [Comparative Example 7]

An agricultural coating composition was prepared in the same manner as in Example 1 except that Em-1 was used as a resin component, 3.3 g of polyethylene wax (trade name: "Liquitron 461", manufactured by The Lubrizol Corporation) was added as an additional additive, the amount of deionized water used was changed to 17.54 g, and sodium dodecyl sulfate was not added, and the agricultural coating composition was named Coat-10. The solid concentration of the obtained agricultural coating composition was 11%, and the breakdown of the solid included 3.5% of the resin component, 3.5% of the polyethylene wax, 3.1% of the inorganic microparticles, and 0.9% of the pigment. It is noted that Em-1 is a resin component (a random copolymer comprising 15 mass% of styrene, 69 mass% of butyl acrylate, 12 mass% of acrylonitrile, and 5 mass% of acrylic acid, polymer solid content: 47%) having the same composition as that of Latex carrier described in Table1 of Patent Document 1 (WO 2013/166020 A).

### [Comparative Example 8]

Agricultural coating composition Coat-11 was obtained in the same manner as in Example 1 except that Em-1 was used as a resin component and sodium dodecyl sulfate was not added. The solid concentration of the obtained agricultural coating composition was 7.5%, and the breakdown of the solid included 3.5% of the resin component, 3.1% of the inorganic microparticles, and 0.9% of the pigment.

### [Comparative Example 9]

Agricultural coating composition Coat-12 was obtained in the same manner as in Comparative Example 7 except that talc (manufactured by FUJIFILM Wako Pure Chemical Corporation) was used as inorganic microparticles. The solid concentration of the obtained agricultural coating composition was 11%, and the breakdown of the solid included 3.5% of the resin component, 3.5% of the polyethylene wax, 3.1% of the inorganic microparticles, and 0.9% of the pigment.

**[Table 1]**

| | Vinyl alcohol polymer | | |
|---|---|---|---|
| | Viscosity-average degree of polymerization | Degree of saponification (mol%) | RT (min.) |
| PVA-1 | 250 | 50 | 23 |
| PVA-2 | 500 | 75 | 21 |
| PVA-3 | 500 | 88 | 18 |
| PVA-4 | 500 | 98 | 17 |

**[Table 2]**

| | | Resin component | Inorganic microparticles (C) | Amount of dust generation [mg/100 g] | Biodegradability |
|---|---|---|---|---|---|
| | | Type | Type | | |
| Example 1 | Coat-1 | PVA-1*¹ | Mica | 11.2 | A |
| Example 2 | Coat-2 | PVA-1*¹ | Talc | 4.2 | A |
| Example 3 | Coat-3 | PVA-1*^{1,2} | Talc | 5.0 | A |
| Comparative Example 1 | Coat-4 | PVA-2 | Mica | 13.0 | A |
| Comparative Example 2 | Coat-5 | PVA-2 | Talc | 10.4 | A |
| Comparative Example 3 | Coat-6 | PVA-3 | Mica | 16.9 | A |
| Comparative Example 4 | Coat-7 | PVA-3 | Talc | 17.2 | A |
| Comparative Example 5 | Coat-8 | PVA-3*¹ | Mica | 23.2 | A |
| Comparative Example 6 | Coat-9 | PVA-4 | Talc | 23.4 | A |
| Comparative Example 7 | Coat-10 | Em-1*² | Mica | 9.9 | B |
| Comparative Example 8 | Coat-11 | Em-1 | Mica | 9.4 | B |
| Comparative Example 9 | Coat-12 | Em-1*² | Talc | 8.0 | B |

| | | | | | |
|---|---|---|---|---|---|
| *1: Sodium dodecyl sulfate was added. *2: Polyethylene wax was added. | | | | | |

### [Table 3]

**Table 3**

| | | Resin component | Inorganic microparticles (C) | Amount of dust generation [mg/100 g] | Biodegradability |
|---|---|---|---|---|---|
| | | Type | Type | | |
| Example 1 | Coat-1 | PVA-1*¹ | Mica | 11.2 | A |
| Comparative Example 1 | Coat-4 | PYA-2 | Mica | 13.0 | A |
| Comparative Example 3 | Coat-6 | PVA-3 | Mica | 16.9 | A |
| Comparative Example 5 | Coat-8 | PVA-3*¹ | Mica | 23.2 | A |

| | | | | | |
|---|---|---|---|---|---|
| *1: Sodium dodecyl sulfate was added. | | | | | |

### [Table 4]

**Table 4**

| | | Resin component | Inorganic microparticles (C) | Amount of dust generation [mg/100 g] | Biodegradability |
|---|---|---|---|---|---|
| | | Type | Type | | |
| Example 2 | Coat-2 | PVA-1*¹ | Talc | 4.2 | A |
| Example 3 | Coat-3 | PVA-1*^{1,2} | Talc | 5.0 | A |
| Comparative Example 2 | Coat-5 | PVA-2 | Talc | 10.4 | A |
| Comparative Example 4 | Coat-7 | PVA-3 | Talc | 17.2 | A |
| Comparative Example 6 | Coat-9 | PVA-4 | Talc | 23.4 | A |

| | | | | | |
|---|---|---|---|---|---|
| *1: Sodium dodecyl sulfate was added. *2: Polyethylene wax was added. | | | | | |

For Examples 1 to 3 and Comparative Examples 1 to 9, the results of the amount of dust generation and the biodegradability are summarized in Table 2 (and summarized in Tables 3 to 4 type by type of the inorganic microparticles used). The agricultural coating compositions of Examples 1 to 3 were agricultural coating compositions satisfying both a small amount of dust generation and biodegradability. The PVAs of Comparative Examples 1, 3, and 5 had RTs of less than 22 minutes, and thus these Comparative Examples were inferior in the amount of dust generation to Example 1, which is an example in which the same mica was used as inorganic microparticles. In addition, Comparative Examples 2, 4, and 6 are examples in each of which the PVA had a RT of less than 22 minutes, and thus these Comparative Examples were inferior in the amount of dust generation to Examples 2 and 3, in which the same talc was used as inorganic microparticles. In addition, the agricultural coating compositions of Comparative Examples 7 to 9 did not comprise the PVA (A) as a resin component and comprised the styrene-acrylate-based copolymer, and therefore were poor in biodegradability.

## Claims

1. An agricultural coating composition comprising a vinyl alcohol polymer (A) that exhibits a retention time RT of a peak top of 22 minutes or more as measured on reversed-phase partition gradient high-performance liquid chromatography with a water-ethanol eluent.

2. The agricultural coating composition according to claim 1, wherein the vinyl alcohol polymer has a degree of saponification of less than 70.0 mol%.

3. The agricultural coating composition according to claim 2, wherein the vinyl alcohol polymer (A) is an unmodified vinyl alcohol polymer.

4. The agricultural coating composition according to claim 1, wherein the agricultural coating composition further comprises inorganic microparticles.

5. The agricultural coating composition according to claim 4, wherein the inorganic microparticles are at least one selected from the group consisting of talc, mica, diatomaceous earth, limestone, gypsum, bentonite, vermiculite, zeolite, silica sand, and barium sulfate.

6. The agricultural coating composition according to claim 5, wherein the inorganic microparticles comprise talc.

7. The agricultural coating composition according to claim 4, wherein a mass ratio of the inorganic microparticles to the vinyl alcohol polymer is 0.5 : 1.0 to 5.0 : 1.0.

8. The agricultural coating composition according to claim 1, wherein the agricultural coating composition is a coating composition for seeds.

9. A coated seed in which at least a part of a surface of a seed is coated with the agricultural coating composition according to any one of claims 1 to 7.

10. The coated seed according to claim 9, wherein the seed is selected from the group consisting of corn, wheat, and soybean.
